Europäisches Patentamt

European Patent Office

Office européen des brevets

(19)

(11)     EP 0 979 013 B1

(12)     **FASCICULE DE BREVET EUROPEEN**

(45) Date de publication et mention
de la délivrance du brevet:
**27.09.2006  Bulletin 2006/39**

(51) Int Cl.:
*H04Q 3/66* (2006.01)       *H04Q 3/62* (2006.01)

(21) Numéro de dépôt: **99401669.9**

(22) Date de dépôt: **05.07.1999**

(54) **Contrôle de l'accès au service d'attente dans un réseau privé de télécommunications**

Wartedienstzugangskontrolle in einem privaten Telekommunikationsnetz

Waiting service access control in a private telecommunications network

(84) Etats contractants désignés:
**AT BE CH CY DE DK ES FI FR GB GR IE IT LI LU
MC NL PT SE**

(30) Priorité:  **06.08.1998  FR 9810130**

(43) Date de publication de la demande:
**09.02.2000  Bulletin 2000/06**

(73) Titulaire: **Naxos Data LLC
Las Vegas NV 89119 (US)**

(72) Inventeurs:
• **Phan, Cao Thanh
92500 Rueil Malmaison (FR)**
• **Bienvenu, Daphné
95130 Franconville (FR)**

(74) Mandataire: **Harris, Ian Richard et al
D Young & Co
120 Holborn
London EC1N 2DY (GB)**

(56) Documents cités:
**EP-A- 0 798 942          EP-A- 0 810 801
EP-A- 0 868 097          EP-A- 0 868 099
US-A- 4 661 974          US-A- 4 802 199
US-A- 5 337 352**

• **N. SHAYE: "Private Interconnect Networks
Overview" GTE AUTOMATIC ELECTRIC WORLD-
WIDE COMMUNICATIONS JOURNAL, vol. 20, no.
1, 1982, pages 2-12, XP002101198 Northlake (US)**
• **TOIT DU A: "PRIVATE PBX NETWORKS: COST
EFFECTIVE COMMUNICATIONS SOLUTIONS"
PROCEEDINGS OF THE AFRICON
CONFERENCE, EZULWINI VALLEY,
SWAZILAND, SEPT. 22 - 24, 1992,22 septembre
1992 (1992-09-22), pages 637-640, XP000420285
INSTITUTE OF ELECTRICAL AND ELECTRONICS
ENGINEERS**
• **TORRIERI D: "ALGORITHMS FOR FINDING AN
OPTIMAL SET OF SHORT DISJOINT PATHS IN A
COMMUNICATION NETWORK" IEEE
TRANSACTIONS ON COMMUNICATIONS, vol. 40,
no. 11, 1 novembre 1992 (1992-11-01), pages
1698-1702, XP000336308**
• **CHIA-JIU WANG ET AL: "THE USE OF
ARTIFICIAL NEURAL NETWORKS FOR OPTIMAL
MESSAGE ROUTING" IEEE NETWORK: THE
MAGAZINE OF COMPUTER COMMUNICATIONS,
vol. 9, no. 2, 1 mars 1995 (1995-03-01), pages
16-24, XP000493486**

**Description**

La présente invention a pour objet un procédé de contrôle de l'accès au service d'attente sur artère occupée dans un réseau privé de télécommunications.

L'invention concerne les réseaux privés de télécommunications. De tels réseaux sont formés de noeuds de communication, reliés entre eux par des arcs ou artères acheminant les communications et/ou la signalisation. Elle s'applique aussi bien aux réseaux privés formés de liaisons dédiées (réseaux privés physiques), qu'aux réseaux privés virtuels, ou aux réseaux mixtes mélangeant ces deux solutions. Dans la suite de la description, l'invention est décrite en référence à un exemple de réseau privé avec signalisation, mais elle s'applique de façon plus générale à d'autres réseaux privés.

L'algorithme de Dijkstra est décrit dans les ouvrages d'algorithmique, et est connu pour trouver dans un graphe un plus court chemin entre deux noeuds. Cet algorithme est le suivant : on considère un graphe G de N noeuds, qui est valué, i. e. dont chaque trajet existant entre deux noeuds i et j est affecté d'une valuation ou poids l(i, j). On considère s un noeud de départ du graphe G, d un noeud d'arrivée, et on cherche un chemin minimisant $\pi$ (s, d), la distance de s à d, i. e. la somme des valuations des arcs reliant s à d. On note S le sous-graphe de G formé des noeuds x pour lesquels on connaît le chemin minimal vers s, et $\overline{S}$ son complémentaire. On note en outre $\Gamma$, l'ensemble des noeuds voisins d'un noeud i donné.

Au départ, le sous-graphe S ne contient que le noeud s, et $\overline{S}$ contient l'ensemble des autres noeuds, affecté des valeurs initiales suivantes:

$\pi$ (s, i) = l(s, i) pour i $\in$ $\Gamma_S$, le noeud parent étant s;
$\pi$ (s, d) = $\infty$, pour les autres noeuds, qui n'ont pas de noeud parent.

Une itération de l'algorithme s'effectue de la façon suivant.

Si $\overline{S}$ est vide, ou s'il ne contient que des noeuds i avec $\pi$ (s, i) = $\infty$, on a terminé.

Sinon, on considère le noeud n de $\overline{S}$ qui est le plus proche du noeud de départ, i. e. le noeud qui minimise $\pi$ (s, i), i $\in$ $\overline{S}$ ; on prend ce noeud et on l'enlève de $\overline{S}$ pour le mettre dans S.

Ensuite, on considère les voisins de ce noeud n et on calcule,

$$\pi \text{ (s, n)} + l(n, i), \, i \in \Gamma_n \text{ et } i \in \overline{S};$$

Si cette quantité est inférieure à $\pi$ (s, j), on met à jour $\pi$ (s, j):

$$\pi \text{ (s, i)} := \pi \text{ (s, n)} + l(n, i)$$

et on met aussi à jour le noeud parent de j, qui devient n.

On procède à cette opération pour tous les noeuds de $\Gamma_n$, puis on réordonne $\overline{S}$.

De la sorte, on ajoute progressivement à S l'ensemble des noeuds du graphe, en procédant par longueur croissante des chemins. Si on recherche un chemin vers un noeud d donné, l'algorithme peut être interrompu avant la fin, dès lors que le noeud de destination a été ajouté dans le sous graphe S.

L'algorithme se démontre par l'absurde de la façon suivante. On considère n le noeud le plus proche de $\overline{S}$, qui doit être ajouté à S. S'il existe un chemin le plus proche, ce chemin part de s et arrive à n, et présente un premier noeud dans $\overline{S}$, noté m. On a alors

$$\pi \text{ (s, m)} + {}^{\pi} \text{(m, n)} < {}^{\pi} \text{(s, n)}$$

et puisque $\pi$ (m, n) est positif ou nul,

$$\pi \text{ (s, m)} < {}^{\pi} \text{(s, n)}$$

ce qui est contraire à l'hypothèse. Il est clair par ailleurs que $\pi$ (s, m) a été calculé dans une itération précédente, lors de l'ajout dans S du parent de m.

J. Eldin et K. P. Lathia, Le RNIS appliqué au Centrex et au réseaux privés virtuels contient une description des réseaux privés physiques et des réseaux privés virtuels. Comme expliqué dans ce document, dans un réseau privé physique, les différents sites ou noeuds sont reliés par des circuits spécialisés, tandis que dans un réseau privé virtuel, chaque noeud est relié au commutateur local le plus proche du réseau public, où un logiciel approprié établit les liaisons à la demande. Deux variantes de réseau privé virtuel existent: on peut d'une part prévoir des liaisons semi-permanentes, qui sont établies sans numérotation, dès que l'un des noeuds a besoin du circuit, et qui relient toujours les deux mêmes points. Ce peut être notamment le cas pour des liaisons de signalisation, dans une application sur un réseau numérique à intégration de service. On peut d'autre part prévoir des liaisons commutées, qui ne peuvent être établies que par numérotation.

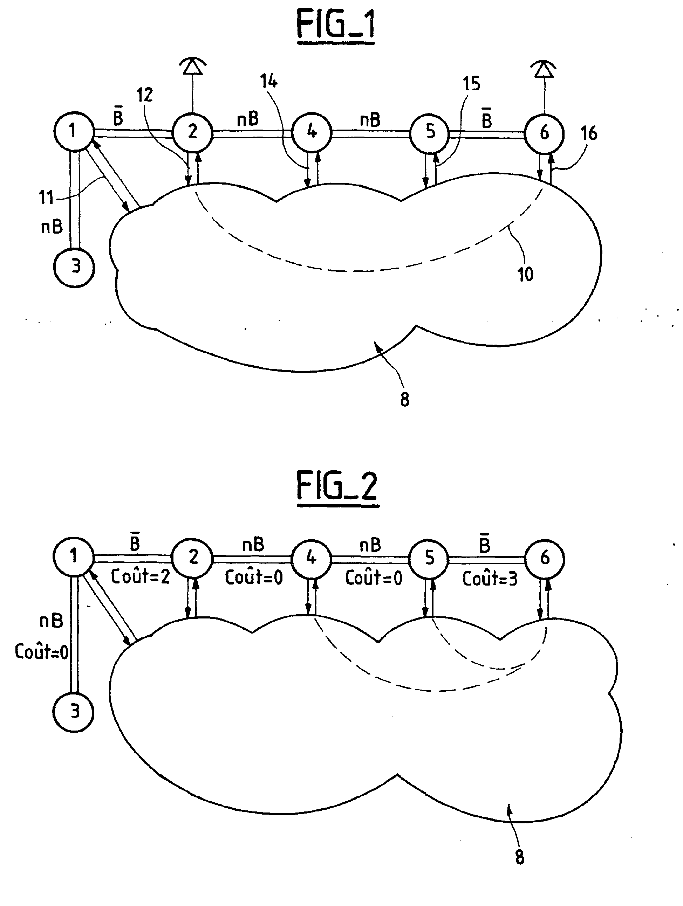

Dans la suite de la description, on considère des réseaux privés physiques ou virtuels, formés de noeuds reliés par des artères, qui peuvent être de tout type: des artères comprenant des liaisons dédiées, ou des artères formées en empruntant le réseau public; celui-ci peut être de type quelconque - le réseau public commuté, un réseau public mobile terrestre, un réseau numérique à intégration de service, etc. La figure 1 montre un exemple de réseau privé. Ce réseau comprend à titre d'exemple des noeuds 1 à 6; les noeuds 1, 2 et 4 à 6 sont reliés au réseau public 8 par des faisceaux 11, 12 et 14 à 16. Les noeuds sont reliés entre eux par des artères formées de liaisons privées, représentées en gras sur la figure, ou comme dans le cas de l'artère entre les noeuds 5 et 6 et de l'artère entre les noeuds 1 et 2, par une artère ne comprenant qu'un canal de signalisation. Pour une artère numérique, chaque artère privée comprend au moins un accès, formé d'un canal de signalisation, et de plusieurs canaux B. Dans le cas de l'artère entre les noeuds 5 et 6 de la figure 1, et de l'artère entre les noeuds 1 et 2, l'artère comprend un canal de signalisation, mais pas de canal B; ce peut typiquement être le cas pour un noeud correspondant à une agence, pour laquelle le volume de trafic n'est pas très important.

Pour les réseaux privés se pose le problème du débordement; i. e. le problème d'une demande de communication qui ne peut pas être satisfaite par le réseau, du fait d'une saturation des ressources. Ceci peut advenir dès lors que les artères privées du réseau privé présentent une capacité fixe, et non allouée dynamiquement, qui est inférieure au volume maximal du trafic possible. Il est connu (introduire une référence de l'art antérieur s'il en existe une) d'assurer la communication correspondante, en empruntant le réseau public. En d'autres termes, si un abonné du noeud 2 cherche à joindre un abonné du noeud 6, et si le réseau privé est saturé et ne peut pas assurer la communication, la communication est assurée à travers les faisceaux 12 et 16 et le réseau public. Ceci peut être le cas, par exemple si l'artère entre les noeuds 2 et 4 est saturée. Sur la figure 1, la référence 10 montre schématiquement une telle communication transitant par le réseau public. Un débordement peut aussi être nécessaire si l'artère en cause ne dispose pas de canal B, comme dans le cas du noeud 6 de la figure 1.

Un problème est le coût de tels débordements. Du fait de ce coût, on peut définir des règles interdisant l'accès de certains abonnés ou de certaines catégories d'abonné à ce service.

Il est par ailleurs connu de fournir un service "attente sur artère occupée" ou CCBL (acronyme de l'anglais call completion on busy link), qui permet un rappel automatique lorsqu'une artère du réseau privé est occupée ou saturée. Dans un tel cas, l'abonné appelant est mis en attente tant que l'artère du réseau privé est saturée, et est rappelé lorsque se libèrent des ressources suffisantes pour le routage de l'appel. Dans les réseaux privés existants, ce service CCBL est accordé sans distinctions entre les abonnés.

Cette solution pose le problème suivant, dans le cas de débordements vers le réseau public. Si un débordement est nécessaire pour atteindre l'abonné appelé, et si les droits de l'abonné ou le coût contrôlé de l'abonné sont inférieurs à la taxe encourue pour ce débordement, le service CCBL ne pourra jamais permettre de rappeler l'abonné. Ceci est notamment le cas pour les abonnés qui n'ont pas de droits aux débordements. La requête CCBL reste donc insatisfaite.

L'invention propose une solution à ce problème nouveau. Elle permet d'éviter les mises en attentes inutiles des abonnés, et de ne pas encombrer le réseau privé par des requêtes CCBL qui ne pourront pas être satisfaites. L'invention s'applique tout particulièrement au cas d'un routage déterminé selon la solution proposée dans la demande déposée le même jour par la demanderesse sous le titre "Routage des appels avec débordement dans un réseau privé". Elle s'applique aussi pour des routages choisis par un procédé distinct, qui permettent un ou plusieurs débordements vers un réseau public.

Une article "Private Interconnect Networks Overview", N. Shaye, GTE Electronics Journal, 01-02 1982, pages 2-12 décrit des procédés de contrôle d'une demande de communication dans un réseau privé de télécommunications permettant un débordement vers un autre réseau (public), dans lequel les abonnés sont affectés de droits aux débordements et dans lequel la demande d'un abonné pour une communication impliquant au moins un débordement est autorisée ou refusée en fonction des droits de l'abonné. Un débordement ("breakout") vers un réseau public est autorisé si l'abonné possède de tels droits ("facility restriction levels" FRL).

Pour cela, l'invention propose un procédé selon la revendication 1.

Dans un mode de mise en oeuvre du procédé, certains abonnés n'ont pas droit aux débordements, et l'accès au service pour une communication impliquant au moins un débordement est refusé aux dits abonnés.

On peut prévoir une étape de calcul du nombre minimal de débordements pour une communication, avantageusement par application de l'algorithme de Dijkstra.

Dans un mode de mise en oeuvre du procédé, certaines artères ne sont pas contrôlées, et certains abonnés n'ont droit aux débordements que sur les dites artères non contrôlées; l'accès au service pour une communication impliquant au moins un débordement sur une artère non contrôlée est alors refusé aux dits abonnés.

On peut prévoir une étape de calcul du nombre minimal de débordements sur des artères contrôlées pour une communication, par exemple par application de l'algorithme de Dijkstra.

Dans un autre mode de mise en oeuvre de l'invention, l'accès au service d'un abonné pour une communication impliquant au moins un débordement est fonction de la comparaison des droits de l'abonné et du coût du ou des débordements.

Le procédé comprend de préférence une étape de calcul du coût minimal des débordements pour une communication, de préférence par application de l'algorithme de Dijkstra.

On peut alors propager un drapeau de connexité lors de l'application de l'algorithme de Dijkstra, de sorte à déterminer s'il existe un chemin sans débordements.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation schématique d'un réseau privé connu;
- figure 2 une représentation schématique d'un réseau privé dans lequel l'invention est mise en oeuvre;
- figures 3 à 6 des ordinogrammes de différents modes de réalisation de l'invention.

L'invention propose, dans un réseau privé virtuel, de déterminer le coût minimal d'une communication, en termes de débordements, de sorte à permettre de gérer efficacement le service CCBL en fonction des droits des abonnés appelants.

Pour cela, l'invention propose d'affecter à chaque artère du réseau privé une valuation ou coût, noté dans la suite CoûtCCBL, reflétant le fait qu'un débordement est ou non nécessaire pour l'acheminement d'une communication entre les deux noeuds reliés par cette artère. La figure 2 montre de nouveau une représentation schématique d'un réseau privé, analogue à celle de la figure 1; on a porté sur la figure 2 le nombre de canaux sur chaque artère, ainsi que le CoûtCCBL correspondant. Celui-ci peut être déterminé de la façon suivante:

- pour les artères permettant l'acheminement de communications, le coût est nul;
- pour les artères impliquant nécessairement un débordement, le coût est non nul.

Ainsi, dans le mode de réalisation de la figure 2, le CoûtCCBL est nul pour les artères entre les noeuds 1 et 3, 2 et 4, 4 et 5. De fait, chacune de ces artères présente au moins un canal B, et permettent donc l'acheminement de communications sans débordement vers le réseau public.

Le CoûtCCBL des artères entre les noeuds 1 et 2 d'une part, et entre les noeuds 5 et 6 d'autre part, est non nul. De fait, ces artères ne présentent pas de canal B, mais juste un canal de signalisation et un débordement est donc indispensable pour l'acheminement d'une communication.

L'invention permet ainsi de déterminer facilement la nécessité ou non d'un débordement pour une demande de communication, et d'accorder ou non le service CCBL. Il suffit pour cela, pour une demande de communication donnée, d'effectuer la somme des CoûtCCBL des artères par lesquelles doit transiter la communication demandée; on obtient alors le coût minimal de la communication.

A titre d'exemple, entre les noeuds 2 et 5, une communication peut être établie en passant par le noeud 4, et en transitant par des artères du réseau privé qui présentent chacune au moins un canal B. Le coût CCBL cumulé des différentes artères est donc nul, et ceci est représentatif du fait qu'une communication peut être établie sans débordement.

Entre les noeuds 4 et 6, par exemple, ou entre les noeuds 2 et 6, une communication ne peut être établie qu'en utilisant un débordement par le réseau public. Ce débordement peut être un débordement direct, comme dans l'art antérieur, par une communication via le réseau public entre les noeuds 4 et 6 par exemple. Comme expliqué dans la demande de brevet de la demanderesse référencée plus haut, le débordement peut aussi être un débordement entre les noeuds 5 et 6, la communication transitant par le réseau privé entre les noeuds 4 et 5.

Dans tous les cas, une communication entre ces noeuds passe nécessairement par une artère du réseau privé dont le CoûtCCBL est non nul. Ceci est représentatif du fait qu'une communication ne peut être établie sans au moins un débordement.

Dans ce mode de réalisation, la valuation ou le coût des artères ne présentant qu'un canal de signalisation présente une valeur non nulle qui peut être quelconque; par exemple une valeur de 1 convient. L'invention permet de refuser le service CCBL à un usager qui n'a pas de droits au débordement, si la communication envisagée implique nécessairement un débordement. Le fonctionnement de l'invention dans ce cas est le suivant. Dans le cas d'une demande d'établissement d'une communication, si une artère est occupée, et que le service CCBL d'attente sur artère occupée est requis, on détermine:

- si l'abonné a droit à un débordement, et
- s'il existe un routage possible sans débordements.

Si l'abonné n'a pas droit à un débordement, et s'il n'existe aucun routage possible pour la communication demandée, le service CCBL est refusé. On évite ainsi toute mise en attente inutile.

Pour déterminer si une communication pour laquelle le service CCBL est requis implique ou non le recours à un débordement, l'invention propose de procéder à un calcul de plus court chemin à travers le réseau privé, en considérant comme distance le CoûtCCBL défini plus haut. Il est ainsi possible de connaître, pour une communication donnée, le coût minimal en termes de débordements , pour refuser ou accorder le service CCBL. En d'autres termes, avec les choix de valuation définis plus haut, on effectue un calcul de plus court chemin:

- si le plus court chemin a une valuation totale nulle, il existe un routage sans débordements;
- si le plus court chemin a une valuation totale non nulle, il n'existe pas de routage sans débordement.

Le calcul de plus court chemin peut avantageusement être effectué par application de l'algorithme de Dijkstra. L'algorithme peut être appliqué à l'invention en considérant le graphe formé des noeuds du réseau privé, les artères entre les noeuds étant valuées par le CoûtCCBL défini plus haut. On obtient ainsi, en une durée en O $(n2)$, le chemin minimal possible pour une communication, en terme de CoûtCCBL cumulé sur les artères du réseau privé.

On pourrait aussi utiliser d'autres procédés pour déterminer s'il existe un routage sans débordement; comme dans l'exemple du deuxième mode de réalisation, une solution consiste à propager un drapeau représentatif de la connexité entre le noeud courant et le noeud source, lors de l'application de l'algorithme de Dijkstra.

L'invention s'applique dans ce premier mode de réalisation, pour refuser le service CCBL à des abonnés n'ayant pas de droits au débordement. A titre d'exemple, en référence à la figure 2, un abonné du noeud 1 peut chercher à établir une communication avec un abonné du noeud 4. Le plus court chemin dans le réseau privé, au sens de la valuation par le CoûtCCBL, est de distance non nulle: de fait, dans la mesure où le noeud 1 n'est relié à la partie du réseau privé contenant le noeud 4 que par l'artère entre les noeuds 1 et 2, qui ne présente pas de canal B, une communication vers un abonné du noeud 4 implique un débordement, au moins sur l'artère entre les noeuds 1 et 2. Dans ce cas, comme expliqué plus haut, si un abonné a des droits qui ne lui permettent pas d'obtenir un débordement, une requête CCBL accordée à cet abonné ne pourra jamais être satisfaite. L'invention propose en conséquence de refuser dans un tel cas le service CCBL à l'abonné.

On décrit maintenant un autre mode de réalisation de l'invention; dans ce mode de réalisation, l'invention propose d'accorder ou non le service d'attente sur artère occupée en fonction des droits de l'abonné, et du coût des débordements nécessaires pour router la communication. L'invention, dans ce mode de réalisation, permet d'affecter aux abonnés des droits plus non pas binaires, mais prenant plus de deux valeurs.

Dans ce mode de réalisation, la valuation ou le coût des artères ne présentant qu'un canal de signalisation présente une valeur non nulle qui est choisie égale au coût du débordement. On permet ainsi non seulement de refuser le service CCBL à des abonnés n'ayant pas droit à un débordement, mais aussi de fournir ou non le service CCBL à des abonnés disposant de droits donnés, en fonction du coût de la communication pour laquelle ce service CCBL est demandé. Ainsi, dans l'exemple de la figure 2, le CoûtCCBL entre les noeuds 1 et 2 est de 2, ce qui reflète le coût du débordement entre ces noeuds; le débordement peut s'effectuer par l'intermédiaire des faisceaux 11 et 12; le CoûtCCBL entre les noeuds 5 et 6 est de 3, pour un débordement via les faisceaux 15 et 16. Dans cet exemple, on a considéré le coût minimal qui correspond aux débordements sur par les faisceaux les plus proches. En fonction de la nature du réseau public, et des faisceaux, le coût minimal peut correspondre à ces débordements par d'autres faisceaux que les faisceaux les plus proches.

Dans ce mode de réalisation, il est aussi possible d'affecter une valuation nulle à une artère pour laquelle un débordement est obligatoire. On peut donc affecter une valuation nulle à une artère ne présentant pas de canaux de transmission, ce qui revient à autoriser les débordement sur cette artère, indépendamment des droits des abonnés. Ceci correspond à un choix de l'administrateur du réseau d'assurer ou non un contrôle des débordements sur une artère donnée.

Dans ce second mode de réalisation l'invention propose de comparer les droits d'un abonné au coût cumulé des débordements. Dans un tel cas, chaque abonné se voit affecter des droits ou coût contrôlé représentatifs de la taxe maximale qu'il peut encourir pour des débordements. Lors d'une requête, le service CCBL est accordé ou refusé en fonction du résultat de la comparaison de ces droits au coût minimal de la communication pour laquelle le service CCBL est requis. Dans une telle configuration, les droits d'un abonné peuvent être défini de la façon suivante:

-1 si l'abonné n'a pas droit à un débordement vers le réseau public;
0 si l'abonné n'a droit au débordement que si les artères ne permettent pas l'acheminement de communications, i. e. dans l'exemple, si les artères ne présentent pas de canaux B;
n, $1 = n = max$, si l'abonné a droit un débordement ou à des débordements vers le réseau public, dans la mesure où les taxes cumulées sont inférieures ou égales à n; max étant une valeur supérieure, pour laquelle les droits de l'abonné ne sont pas limités.

Dans cet exemple de définition des droits des abonnés, on retrouve pour un abonné avec des droits "-1" le cas décrit plus haut en référence au premier mode de réalisation. Un tel abonné n'a pas la possibilité d'obtenir un service CCBL impliquant des débordements; ce peut être le cas pour des communications longues, comme par exemple des transferts de données. Cette définition des droits avec une valeur "-1" permet de différencier les abonnés pour lesquels un débordement n'est jamais possible, même pour des artères sans canaux de transmission présentant une valuation nulle.

Un abonné avec des droits "0" peut obtenir un service CCBL sur un routage sans débordement, ou alors sur un routage comprenant des débordements sur des artères non contrôlées, i. e. sur des artères sans canaux de transmission dont la valuation est nulle.

Un abonné avec des droits n, $1 = n = max$ peut obtenir le service CCBL pour une communication impliquant des débordements d'un coût total inférieur à n.

Pour la mise en oeuvre de l'invention dans ce mode de réalisation, on peut de nouveau utiliser l'algorithme de Dijkstra pour déterminer le coût minimal d'un routage, de sorte à accorder ou non le service CCBL. On peut en même temps déterminer s'il existe un routage sans débordement, en propageant un drapeau représentatif de la connexité avec le noeud source par l'intermédiaire de canaux B. On peut donc utiliser lors des itérations de l'algorithme de Dijkstra un drapeau BchConnexe (i) représentatif de la connexité du noeud i avec le noeud source par des artères avec des canaux B. On arrive ainsi à déterminer simplement s'il existe un routage sans débordements.

On initialise BchConnexe(i) à la valeur fausse pour tout i différent de s. Avec les mêmes notations qu'au dessus, on considère n un noeud et $\Gamma_n$ son voisinage, le noeud n étant à un instant donné le sommet du sous graphe $\bar{S}$. Pour tout noeud v du voisinage, on détermine s'il existe un canal B entre le noeud n et le noeud v. S'il existe un tel canal - ce qui peut être déclaré lors de l'initialisation du réseau -, on met à jour le drapeau BchConnexe(v) du noeud v à la valeur vraie, si le drapeau BchConnexe(n) du noeud n est vrai. En d'autres termes, si le noeud v est connexe au noeud s par des canaux B, et si l'artère entre n et v comprend aussi un canal B, le noeud v est connexe au noeud s par des canaux n.

Si le noeud n n'est pas connexe au noeud s, ou s'il n'existe pas de canal B entre le noeud n et ne noeud v, on laisse le drapeau du noeud v à sa valeur courante. Cette solution permet, lors de l'application de l'algorithme de Dijkstra pour le calcul d'un plus court chemin, de déterminer l'existence d'un routage sans débordements; on peut alors, s'il n'en existe pas, éviter de mettre en attente inutilement des abonnés ayant des droits "-1".

Pour valuer les artères, on peut utiliser un CoûtCCBL défini comme suit. Si l'artère entre le noeud n et le noeud v présente au moins un canal B, on considère que le CoûtCCBL de l'artère est nul; s'il n'existe pas de canal B entre le noeud n et le noeud v, on vérifie s'il existe un débordement. Si tel est le cas, on détermine si l'artère entre n et v est soumise à un contrôle. Si ce n'est pas le cas, le CoûtCCBL est nul. Si au contraire l'artère est soumise à un contrôle, alors le CoûtCCBL est égal au coût du débordement. Au contraire, s'il n'existe pas de débordement, le CoûtCCBL de l'artère est infini. De la sorte, on définit un CoûtCCBL avec les valeurs suivantes:

> 0 pour les artères présentant un canal B, ou pour les artères non-contrôlées;
> le coût du débordement pour les artères sans canal B contrôlées;
> infini pour les artères sans canal B pour lesquelles un débordement n'est pas possible.

Le choix de cette fonction de coût permet de contrôler le coût du débordement en fonction des droits de l'abonné. En outre, la propagation dans l'algorithme d'un drapeau représentatif de la connexité avec la source par des canaux B permet de refuser le service à ceux des abonnés qui n'ont aucun droit au débordement.

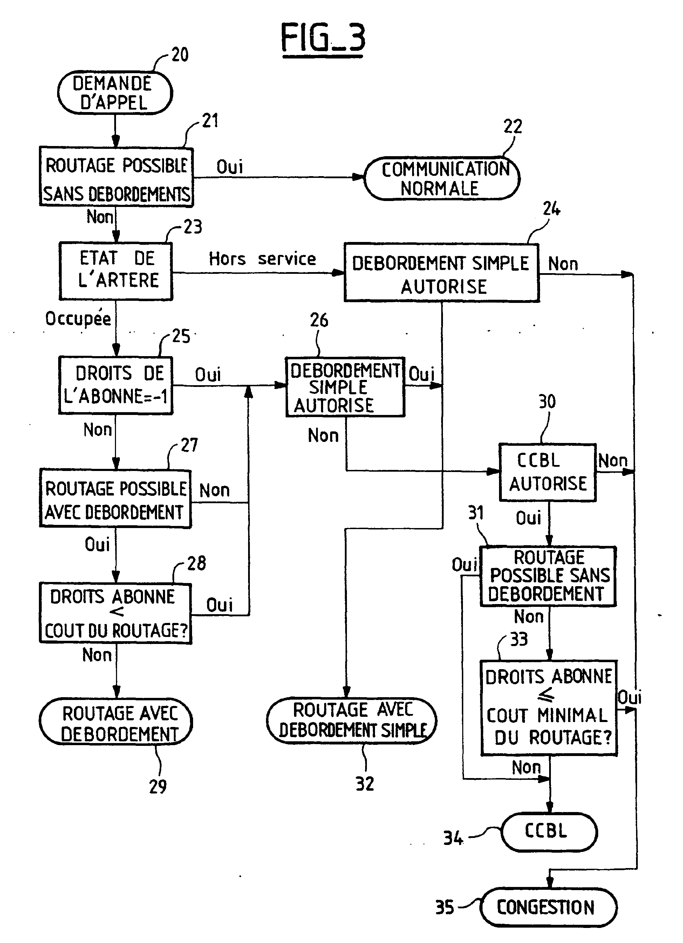

La figure 3 montre un ordinogramme d'un mode de réalisation de l'invention, pour un tel type de définition des droits des abonnés; dans le mode de réalisation de la figure 3, on a considéré non seulement les débordements du type décrit plus haut, mais aussi les débordements simples vers le réseau public. Dans le premier cas, appelé aussi dans la suite "réseau privé virtuel", le débordement est transparent pour l'utilisateur du réseau privé; la signalisation est acheminée par le réseau privé, et le débordement compense l'absence ou la saturation des canaux B. Dans le deuxième cas, le débordement revient à ne fournir à l'abonné que les services du réseau public, en perdant les services spécifiques au réseau privé.

L'étape 20 correspond à une demande d'établissement d'appel, par un abonné donné du réseau privé. A l'étape 21, on détermine si l'appel peut être routé dans le réseau privé, sans débordements. Si la réponse est positive, on passe à l'étape 22, et la liaison est établie à travers le réseau privé, sans débordements. Si la réponse est négative, on passe à l'étape 23.

A l'étape 23, le routage est impossible sans débordement; on détermine l'état du ou des artères pour lesquelles un débordement est nécessaire; si une artère est hors service, on passe à l'étape 24, et sinon, on passe à l'étape 25. Cette étape n'est pas obligatoire, mais elle présente l'avantage de permettre un traitement différent des appels dans le cas où une partie du réseau privé est hors service.

A l'étape 24, on sait qu'une artère est hors service. On ne peut pas dans ce cas assurer de liaison fournissant les services du réseau privé. On détermine si un débordement simple est autorisé dans ce cas d'artère hors service. Ceci représente en fait un paramétrage du réseau privé par l'opérateur. Si la réponse est négative, on a une congestion, et on passe à l'étape 35, et le service CCBL est refusé.

Si au contraire la réponse est positive, on passe à l'étape 32. Dans cette étape 32, on assure le routage de la communication avec un débordement simple, i. e. en fournissant simplement les services du réseau public.

A l'étape 25, on sait que le débordement est imposé par une saturation des canaux d'au moins une artère; on détermine les droits de l'abonné appelant. Si les droits de l'abonné sont "-1", i. e. si l'abonné n'a jamais droit à un débordement, on passe à l'étape 26. Si non, on passe à l'étape 27.

A l'étape 27, on détermine si l'appel peut être routé avec un ou plusieurs débordements; si c'est le cas, on passe à l'étape 28, et sinon, on passe à l'étape 26.

A l'étape 28, on compare le coût du routage avec débordement aux droits de l'abonné. Si les droits de l'abonné sont strictement inférieurs au coût du routage de l'appel, on passe à l'étape 26, et sinon, on passe à l'étape 29.

A l'étape 29, on achemine l'appel avec un ou plusieurs débordements vers le réseau public, en réseau privé virtuel. Dans ce cas, il n'est pas nécessaire de fournir un service CCBL. Comme expliqué plus haut, on fournit dans ce cas les services du réseau , et le ou les débordements sont transparents pour l'abonné.

A l'étape 26, on est dans le cas où une des artères permettant l'établissement de la liaison est saturée, et où un débordement préservant les services du réseau privé n'a pas été accordé du fait d'une limitation des droits de l'abonné. On détermine si l'abonné a droit à un débordement simple dans le cas d'une artère occupée. Si tel est le cas, on passe à l'étape 32, où l'on assure, comme indiqué plus haut, le routage de la communication avec un débordement simple.

Si tel n'est pas le cas, on passe à l'étape 30. On détermine si l'abonné a droit au service CCBL. Si c'est le cas, on passe à l'étape 31, et si ce n'est pas le cas, on passe à l'étape 35. A l'étape 35, on a une congestion, comme indiqué plus haut.

A l'étape 31, on détermine s'il existe un routage possible à travers le réseau privé, n'utilisant que les artères du réseau privé. Ceci peut simplement s'effectuer par le calcul de plus court chemin mentionné pour le premier mode de réalisation, avec une valuation non nulle pour toutes les artères sans canaux de transmission. Ceci peut aussi s'effectuer par propagation d'un drapeau dans le calcul de plus court chemin avec l'algorithme de Dijkstra.

Si c'est le cas, on passe à l'étape 34, où l'on fournit le service CCBL.

Si ce n'est pas le cas, on passe à l'étape 33. A l'étape 33, on détermine si les droits de l'abonné sont inférieurs ou égaux au coût total du routage minimal, i. e. au coûtCCBL le plus faible pour la liaison demandée. De nouveau, cette comparaison s'effectue avantageusement en appliquant l'algorithme de Dijkstra, comme expliqué plus haut.

Si les droits de l'abonné sont inférieurs ou égaux au coût total du routage minimal, on passe à l'étape 35. On a alors une congestion.

Si les droits de l'abonné sont supérieurs au coût total du routage minimal, on passe à l'étape 34, où l'on fournit le service CCBL.

De la sorte, on assure dans tous les cas que le service CCBL est refusé si l'utilisateur n'a pas les droits suffisants, et l'on évite les attentes infinies. Ainsi, en supposant que les artères sont en services (pas d'artère hors service à l'étape 23) :

- un abonné n'ayant pas de droits au débordement préservant les services du réseau ni au débordement simple ne se voit fournir un service CCBL que s'il existe un routage possible à travers le réseau privé, en passant par les étapes 25, 26, 30, 31 et 34;
- un abonné ayant des droits au débordement préservant les services du réseau ne se voit fournir un service CCBL que s'il existe un routage possible à travers le réseau privé, dont le coût est compatible inférieur strictement à ses droits, en passant par les étapes 25, 26, 30, 31, 33 et 34.

On notera que l'ordinogramme de la figure 3 est compatible avec les différents modes de valuation des débordement envisagés plus haut on peut donner ou non un coût CCBL nul à une artère sans canaux B, sans que ceci ne modifie le fonctionnement décrit en référence à la figure 3.

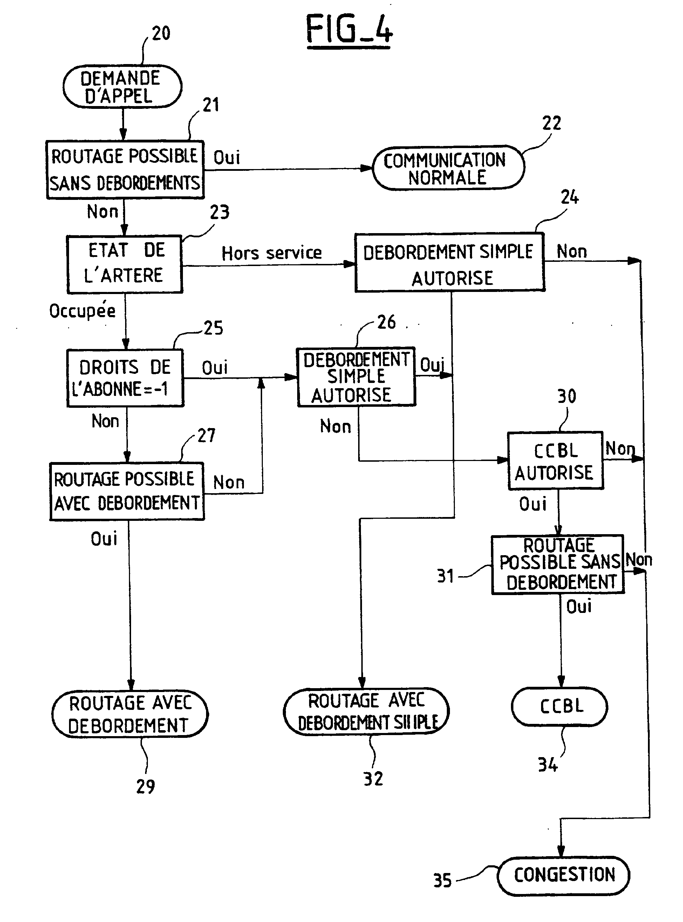

La figure 4 montre un ordinogramme d'un autre mode de réalisation de l'invention; l'ordinogramme de la figure 4 est adapté au premier mode de réalisation mentionné plus haut, où il s'agit simplement de refuser un service CCBL si l'abonné n'y a pas droit. L'ordinogramme de la figure 4 est similaire à celui de la figure 3, aux modifications suivantes près:

- l'étape 28 est supprimée, de sorte que l'on passe directement, le cas échéant de l'étape 27 à l'étape 29;
- l'étape 33 est supprimée, de sorte à passer directement de l'étape 31 à l'étape 35 s'il n'y a pas de routage possible à l'intérieur du réseau privé.

Le mode de réalisation de la figure 4 permet simplement:

- de refuser le service CCBL pour certaines catégories d'abonnés n'ayant pas droit au débordement, s'il n'existe pas de routage possible dans le réseau privé;
- d'accorder le service CCBL dans les autres cas, indépendamment du coût des débordements.

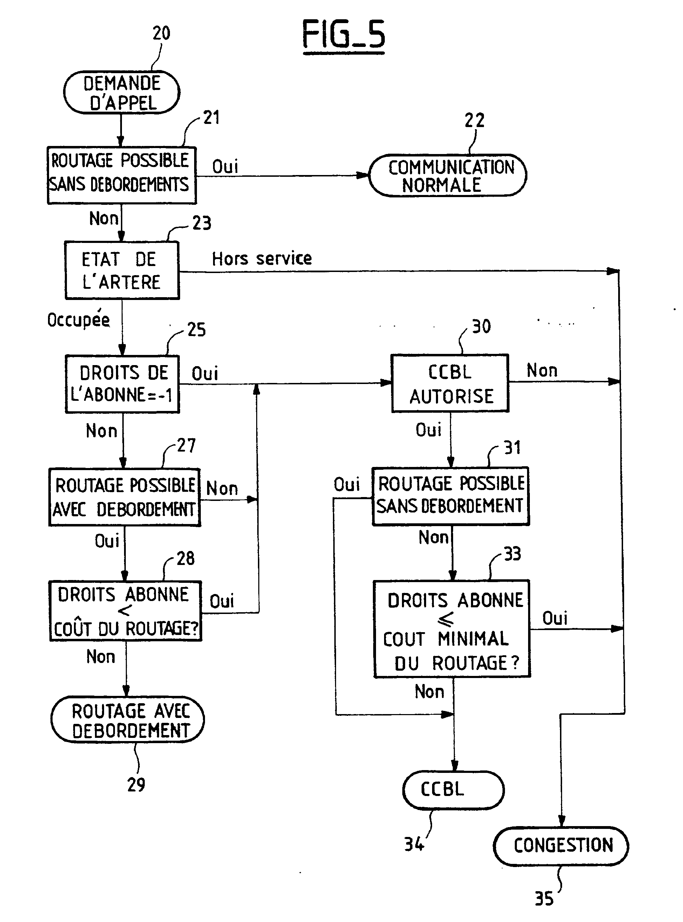

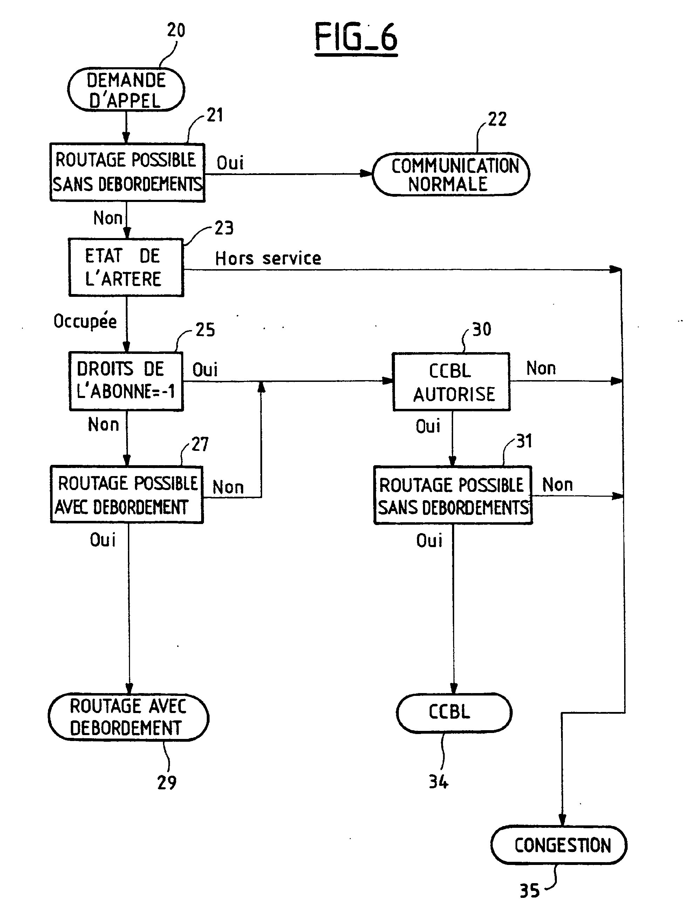

Les figures 5 et 6 montrent chacune un ordinogramme d'un autre mode de réalisation de l'invention; ces figures correspondent aux cas où l'on ne fournit pas de débordement simple.

L'ordinogramme de la figure 5 est similaire à celui de la figure 3, aux modifications suivantes près:

- l'étape 24 est supprimée, de sorte que l'on passe directement, le cas échéant de l'étape 23 à l'étape 35;
- l'étape 26 est supprimée, de sorte à passer directement de l'étape 25, 27 ou 28 à l'étape 30.

L'ordinogramme de la figure 6 est similaire à celui de la figure 4, aux modifications suivantes près:

- l'étape 24 est supprimée, de sorte que l'on passe directement, le cas échéant de l'étape 23 à l'étape 35;
- l'étape 26 est supprimée, de sorte à passer directement de l'étape 25 ou 27 à l'étape 30.

Le fonctionnement selon les ordinogrammes des figures 5 et 6 est respectivement similaires à celui des figures 3 et 4, toutefois, on ne fournit pas de débordement simple.

Dans tous ses modes de réalisation, l'invention ainsi permet de gérer le service CCBL de sorte à éviter de mettre en attente infinie un usager dont les droits ne sont pas suffisants pour permettre ensuite le routage de la communication.

Bien entendu, la présente invention n'est pas limitée aux exemples et modes de réalisation décrits et représentés, mais elle est susceptible de nombreuses variantes accessibles à l'homme de l'art. Elle s'applique à d'autres types de réseaux privés que ceux décrits plus haut. Elle s'applique aussi à d'autres types de débordements que ceux décrits dans la demande de brevet "Routage des appels avec débordement dans un réseau privé". On a utilisé pour la description ci-dessus les termes "débordement privé public"; l'invention s'applique aussi bien à des débordements vers des réseaux publics différents, comme le réseau public commuté, les réseaux publics mobiles terrestres ou satellites, et/ou à des débordements vers d'autres réseaux privés.

Par ailleurs, on pourrait dans le deuxième mode de réalisation décrit plus haut, ne pas définir d'abonnés avec des droits "-1"; dans un tel cas, par rapport à la description de la figure 3, on ne différencie pas:

- une artère de valuation nulle car elle présente des canaux de transmission;
- une artère de valuation nulle bien qu'elle ne présente pas de canaux de transmission, i. e. une artère qui n'est pas contrôlée.

En outre, l'affectation d'un coût CCBL aux artères du réseau privé peut aussi être utilisée pour d'autres applications.

Enfin, la description et les revendications mentionnent l'algorithme de Dijkstra. Il est entendu que ce terme couvre non seulement la version de l'algorithme de plus court chemin proposée par Dijkstra, mais aussi les versions proches, et notamment l'algorithme de Bellman ou l'algorithme de Floyd. On notera que l'algorithme de Bellman ne s'applique que pour les graphes sans circuits.

**Revendications**

1. Procédé de contrôle de l'accès au service d'attente sur artère occupée dans un réseau privé de télécommunications permettant un débordement vers un autre réseau, dans lequel si une artère du réseau privé nécessaire pour le routage d'un appel est occupée, ledit service fournit un rappel automatique lorsque des ressources suffisantes sont disponibles pour le routage dudit appel, le procédé comprenant :

l'affectation à chaque artère connectant deux noeuds du réseau privé de télécommunications d'une valuation indiquant si un débordement est nécessaire pour acheminer un appel entre les deux noeuds ;
l'allocation à des abonnés dudit réseau privé de télécommunications de droits à des débordements ;
la détermination d'une valuation totale d'artères demandées pour le routage d'un appel par un abonné ; et
le fait de déterminer si l'on donne accès audit service d'un abonné pour ledit appel sur la base d'une comparaison entre lesdits droits à des débordements dudit abonné et la valuation totale pour acheminer ledit appel.

2. Procédé selon la revendication 1, dans lequel ladite étape consistant à déterminer si l'on donne accès audit service comprend le fait de refuser l'accès audit service lorsque ledit droit à des débordements dudit abonné ne permet pas de débordements et si ladite valuation totale indique que ledit appel nécessite au moins un débordement.

3. Procédé selon la revendication 2, dans lequel ladite étape de détermination de la valuation totale d'artères demandées pour l'acheminement de l'appel comprend le calcul du nombre minimal de débordements pour un appel.

4. Procédé selon la revendication 3, dans lequel ladite étape de détermination de la valuation totale d'artères nécessaires pour l'acheminement de l'appel utilise un algorithme de Dijkstra.

5. Procédé selon l'une quelconque des revendications 1 à 4, dans lequel ladite étape consistant à déterminer si l'on donne accès audit service comprend le refus dudit service lorsque ladite valuation totale indique que ledit appel nécessite au moins un débordement sur une artère non contrôlée pour laquelle ledit abonné ne dispose de droits de débordement.

6. Procédé selon la revendication 5, dans lequel ladite étape de détermination de la valuation totale d'artères nécessaires pour l'acheminement de l'appel comprend le calcul de la valuation totale d'artères impliquant le nombre minimal de débordements pour l'appel.

7. Procédé selon la revendication 6, dans lequel ladite étape de détermination de la valuation totale d'artères nécessaires pour l'acheminement de l'appel utilise un algorithme de Dijkstra.

8. Procédé selon l'une quelconque des revendications 1 à 7, dans lequel ladite étape de détermination de la valuation totale d'artères nécessaires pour l'acheminement de l'appel comprend le calcul de la valuation totale d'artères pour l'acheminement de l'appel qui aboutissent à une valuation totale minimale.

9. Procédé selon la revendication 8, dans lequel ladite étape de détermination de la valuation totale d'artères nécessaires pour l'acheminement de l'appel utilise un algorithme de Dijkstra.

10. Procédé selon la revendication 9, dans lequel un drapeau de connexité est propagé pendant l'application de l'algorithme de Dijkstra pour déterminer s'il existe un chemin sans débordements.

## Claims

1. A method of controlling access to a call completion on busy link service in a private telecommunication network allowing overflow to another network, wherein if a link of the private network necessary for routing a call is congested, said service providing automatic callback when sufficient resources are available to route said call, the method comprising the steps:

   assigning to each link connecting two nodes of the private telecommunication network a valuation indicating whether an overflow is necessary to route a call between the two nodes;
   allocating to users of said private telecommunications network rights to overflows;
   determining a total valuation of links required for routing a call by a user; and
   determining whether to provide access to said service to said user for said call based on a comparison between said rights to overflows of said user and the total valuation for routing said call.

2. The method claimed in claim 1, wherein said step of determining whether to provide access to said service includes refusing access to said service where said right to overflows of said user do not allow for overflows and said total valuation indicates that said call requires at least one overflow.

3. The method claimed in claim 2, wherein said step of determining the total valuation of links required for routing the call includes calculating the minimum number of overflows for a call.

4. The method claimed in claim 3, wherein said step of determining the total valuation of links required for routing the call uses a Dijkstra algorithm.

5. The method claimed in any one of claims 1 to 4, wherein said step of determining whether to provide access to said service includes refusing said service when said total valuation indicates that said call requires at least one overflow onto an unmonitored link to which said user does not have rights to overflows.

6. The method claimed in claim 5, wherein said step of determining the total valuation of links required for routing the call includes calculating the total valuation of links entailing the minimum number of overflows for the call.

7. The method claimed in claim 6, wherein said step of determining the total valuation of links required for routing the call uses a Dijkstra algorithm.

8. The method claimed in any one of claims 1 to 7, wherein said step of determining the total valuation of links required for routing the call includes calculating the total valuation of links for routing the call which result in a minimum total valuation.

9. The method claimed in claim 8, wherein said step of determining the total valuation of links required for routing the call utilizes a Dijkstra algorithm.

10. The method claimed in claim 9, wherein a connectivity flag is propagated during application of the Dijkstra algorithm to determine if there is a path without overflows.

## Patentansprüche

1. Verfahren zur Kontrolle des Zugangs zu einem Wartedienst auf einer besetzten Leitung in einem privaten Telekommunikationsnetz, das ein Umleiten in ein anderes Netzwerk erlaubt, bei dem, wenn eine Leitung des privaten Netzwerkes, die für das Routen eines Anrufes notwendig ist, besetzt ist, dieser Dienst einen automatischen Rückruf zur Verfügung stellt, wenn die ausreichenden Ressourcen für das Routen dieses Anrufes zur Verfügung stehen, wobei das Verfahren aufweist:

   die Zuordnung zu jeder Leitung, die zwei Knoten des privaten Telekommunikationsnetzwerkes verbindet, einer Bewertung, die anzeigt, ob eine Umleitung notwendig ist, um einen Anruf zwischen den zwei Knoten weiterzuleiten;
   die Zuweisung von Rechten auf Umleitungen an Abonnenten des privaten Telekommunikationsnetzwerkes;
   die Bestimmung eines Gesamtwertes der für das Routen eines Anrufes von einem Abonnenten angefragten Leitungen; und
   die Tatsache, dass auf der Basis eines Vergleiches zwischen den Rechten auf Umleitungen des Abonnenten und dem Gesamtwert, um den Anruf weiterzuleiten, bestimmt wird, ob man für diesen Anruf Zugang zu dem Dienst dieses Abonnenten gewährt.

2. Verfahren nach Anspruch 1, bei dem der Schritt, der darin besteht, zu bestimmen, ob man Zugang zum besagten Dienst gewährt, die Tatsache umfasst, den Zugang zu diesem Dienst zu verweigern, wenn das Recht auf Umleitungen des Abonnenten keine Umleitung erlaubt und wenn der Gesamtwert anzeigt, dass der Anruf mindestens eine Umleitung benötigt.

**3.** Verfahren nach Anspruch 2, bei dem der Schritt des Bestimmens des Gesamtwertes der für das Weiterleiten des Anrufes angefragten Leitungen das Berechnen der minimalen Anzahl von Umleitungen für einen Anruf umfasst.

**4.** Verfahren nach Anspruch 3, bei dem der Schritt des Bestimmens des Gesamtwertes der für das Weiterleiten des Anrufes notwendigen Leitungen einen Algorithmus von Dijkstra benutzt.

**5.** Verfahren nach einem der Ansprüche 1 bis 4, bei dem der Schritt, der darin besteht zu bestimmen, ob man Zugang zu dem Dienst gewährt, die Ablehnung dieses Dienstes umfasst, wenn der Gesamtwert anzeigt, dass der Anruf mindestens eine Umleitung auf eine nicht kontrollierte Leitung benötigt, für die der Abonnent keine Rechte auf Umleitungen hat.

**6.** Verfahren nach Anspruch 5, bei dem der Schritt der Bestimmung des Gesamtwertes der Leitungen, die für das Weiterleiten des Anrufes notwendig sind, die Berechnung des Gesamtwertes der Leitungen umfasst, die die minimale Anzahl von Umleitungen für den Anruf implizieren.

**7.** Verfahren nach Anspruch 6, bei dem der Schritt der Bestimmung des Gesamtwertes der Leitungen, die für das Weiterleiten des Anrufes notwendig sind, einen Algorithmus von Dijkstra benutzt.

**8.** Verfahren nach einem der Ansprüche 1 bis 7, bei dem der Schritt der Bestimmung des Gesamtwertes der Leitungen, die für das Weiterleiten des Anrufes notwendig sind, die Berechnung des Gesamtwertes der Leitungen für das Weiterleiten des Anrufes, die zu einem minimalen Gesamtwert führen, umfasst.

**9.** Verfahren nach Anspruch 8, bei dem der Schritt der Bestimmung des Gesamtwertes der Leitungen, die für das Weiterleiten des Anrufes notwendig sind, einen Algorithmus von Dijkstra benutzt.

**10.** Verfahren nach Anspruch 9, bei dem ein Markierungszeichen zur Verbindungsfähigkeit während der Anwendung des Algorithmus von Dijkstra, um zu bestimmen, ob ein Weg ohne Umleitung existiert, verbreitet wird.

# FIG_1

# FIG_2

## FIG_3

# FIG_4

20

DEMANDE
D'APPEL

21

ROUTAGE POSSIBLE
SANS DEBORDEMENTS — Oui → COMMUNICATION NORMALE (22)

Non

23

ETAT DE L'ARTERE — Hors service → DEBORDEMENT SIMPLE AUTORISE (24) — Non →

Occupée

25

DROITS DE L'ABONNE =-1 — Oui → DEBORDEMENT SIMPLE AUTORISE (26) — Oui →

Non

Non (26)

CCBL AUTORISE (30) — Non →

27

ROUTAGE POSSIBLE AVEC DEBORDEMENT — Non →

Oui

Oui

ROUTAGE POSSIBLE SANS DEBORDEMENT (31) — Non →

Oui

ROUTAGE AVEC DEBORDEMENT

29

ROUTAGE AVEC DEBORDEMENT SIMPLE

32

CCBL

34

CONGESTION (35)

## FIG_5

```
                    20
              ┌─────────────┐
              │  DEMANDE    │
              │  D'APPEL    │
              └─────────────┘
                    │              21                              22
              ┌─────────────────┐                          ┌─────────────────┐
              │ ROUTAGE POSSIBLE│      Oui                  │  COMMUNICATION  │
              │ SANS DEBORDEMENTS├─────────────────────────►│    NORMALE      │
              └─────────────────┘                          └─────────────────┘
                    │ Non
                    │           23
              ┌─────────────┐           Hors service
              │  ETAT  DE   ├──────────────────────────────────────────────────┐
              │  L'ARTERE   │                                                   │
              └─────────────┘                                                   │
                    │                                                           │
             Occupée│              25                          30               │
              ┌─────────────┐   Oui              ┌─────────────┐   Non          │
              │ DROITS DE   ├───────────────────►│    CCBL     ├────────────────┤
              │ L'ABONNE=-1 │                    │  AUTORISE   │                │
              └─────────────┘                    └─────────────┘                │
                    │ Non                              │ Oui                    │
                    │           27                     │          31            │
              ┌─────────────────┐  Non      Oui ┌─────────────────┐            │
              │ ROUTAGE POSSIBLE├──────┐    ┌───┤ ROUTAGE POSSIBLE│            │
              │ AVEC DEBORDEMENT│      │    │   │ SANS DEBORDEMENT│            │
              └─────────────────┘      │    │   └─────────────────┘            │
                    │ Oui              │    │         │ Non                    │
                    │           28     │    │         │         33             │
              ┌─────────────┐  Oui     │    │   ┌─────────────────┐            │
              │DROITS ABONNE ├─────────┘    │   │ DROITS ABONNE   │   Oui      │
              │      <       │             │   │      ≤          ├────────────┤
              │COÛT DU ROUTAGE?│            │   │ COUT  MINIMAL   │            │
              └─────────────┘              │   │ DU  ROUTAGE?    │            │
                    │ Non                  │   └─────────────────┘            │
                    │                      │         │ Non                    │
              ┌─────────────┐              │         │                        │
              │ ROUTAGE AVEC│              └─────────┤                        │
              │ DEBORDEMENT │                        │                        │
              └─────────────┘                  ┌─────────┐              ┌─────────────┐
                    │                          │  CCBL   │              │ CONGESTION  │
                    29                         └─────────┘              └─────────────┘
                                                   34                        35
```

## FIG_6

DEMANDE D'APPEL — 20

ROUTAGE POSSIBLE SANS DEBORDEMENTS — 21
→ Oui → COMMUNICATION NORMALE — 22
↓ Non

ETAT DE L'ARTERE — 23
→ Hors service
↓ Occupée

DROITS DE L'ABONNE=-1 — 25
→ Oui
↓ Non

ROUTAGE POSSIBLE AVEC DEBORDEMENT — 27
→ Non
↓ Oui

ROUTAGE AVEC DEBORDEMENT — 29

CCBL AUTORISE — 30
→ Non
↓ Oui

ROUTAGE POSSIBLE SANS DEBORDEMENTS — 31
→ Non
↓ Oui

CCBL — 34

CONGESTION — 35